(19) Europäisches Patentamt / European Patent Office / Office européen des brevets

(11) **EP 4 420 219 B1**

(12) **EUROPEAN PATENT SPECIFICATION**

(45) Date of publication and mention
of the grant of the patent:
**17.12.2025  Bulletin 2025/51**

(21) Application number: **23703124.0**

(22) Date of filing: **12.01.2023**

(51) International Patent Classification (IPC):
**H02K 1/2753** *(2022.01)*     **H02K 1/276** *(2022.01)*
**H02K 1/278** *(2022.01)*

(52) Cooperative Patent Classification (CPC):
**H02K 1/2753; H02K 1/276; H02K 1/2766;
H02K 1/278;** H02K 2213/03

(86) International application number:
**PCT/CZ2023/050002**

(87) International publication number:
**WO 2024/149414 (18.07.2024 Gazette 2024/29)**

(54) **ROTOR WITH PERMANENT MAGNETS WITH AT LEAST TWO POLES FOR AT LEAST FIVE-PHASE ALTERNATING CURRENT ELECTRIC MACHINE**

ROTOR MIT DAUERMAGNETEN MIT MINDESTENS ZWEI POLEN FÜR MINDESTENS FÜNF-PHASEN-WECHSELSTROM-ELEKTROMASCHINE

ROTOR À AIMANTS PERMANENTS PRÉSENTANT AU MOINS DEUX PÔLES POUR AU MOINS UNE MACHINE ÉLECTRIQUE À COURANT ALTERNATIF À CINQ PHASES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.08.2024  Bulletin 2024/35**

(73) Proprietor: **Západoceská univerzita v Plzni**
**301 00 Plzen (CZ)**

(72) Inventors:
• **PEROUTKA, Zdenek**
**31200 Plzen (CZ)**

• **LAKSAR, Jan**
**34562 Holysov (CZ)**
• **KOMRSKA, Tomas**
**30100 Plzen (CZ)**

(74) Representative: **Zmeskal, Lukas**
**Langrova, s.r.o**
**Skrétova 1011/48**
**301 00 Plzen (CZ)**

(56) References cited:
**CN-A- 107 733 112     JP-A- 2019 122 232
US-A- 5 990 591     US-B1- 6 211 593**

**Description**

Field of the invention

The invention relates a rotor with permanent magnets which is suitable for at least five-phase alternating current electric machine.

Background of the invention

Multiphase alternating current (ac) permanent magnet electrical machines with five and more phases and with odd number of phases provide additional degrees of freedom in their control which can be used to the injection of higher harmonic components of the stator current and voltage. Higher harmonic components of current or voltage can be injected in the stator winding of every type of ac electric machines. The electric machine with injected higher harmonic components of current and voltage can be seen as a set of n virtual independent but magnetically coupled electrical machines [1], where n is the total number of harmonic components of both current and voltage. Interaction of the higher harmonic in back EMF (counter-electromotive force) and appropriate injected current harmonic increases the total output torque. In the practical applications, the magnitude of the higher harmonic component of both voltage and current decrease and the torque produced by the fifth and higher harmonic components is unimportant. The shape of the back EMF is given by both the rotor magnetic circuit and stator winding design. The power electronics converter supplying the multiphase electrical machine creates appropriate time harmonics in stator current. In the most present applications, the electrical machine is supplied by voltage source inverter (VSI). Therefore, the modern ac machine design must find optimal back EMF and stator voltage waveform which is strongly constrained by available dc voltage in the VSI dc link.

The rotor magnetic circuit design defines the shape of the flux in the air gap. The air gap flux interacts with the stator winding and creates back EMF. The rotors of five- and more-phase permanent magnet ac machines are modified to support the third harmonic flux density component to obtain additional torque. The rotor surface can be modified by local increase of the air gap length between the stator and the rotor. This airgap increase is often located in the pole axis and cause the flattening or decrease of the air gap magnetic field near to the zero value. This solution is known from WO2015049467A2, CN104883017A, [2], and [3]. Typically, this solution results in the third harmonic component of the air gap flux density close to the fundamental harmonic component of the air gap flux density. In such a case, the fundamental harmonic of the back EMF can be lower than the third harmonic of the back EMF. WO2015049467A2, [2], and [4] introduce an alternative solution for rotors with buried magnets which are magnetized in the tangential direction. Two auxiliary magnets, which are also magnetized in the tangential direction, are placed between main rotor pole magnets. The auxiliary magnets are buried in the rotor. They have opposite magnetic direction than the main rotor pole magnets and hence, they weak the magnetic flux density in the rotor pole axis. As described above, this solution results in the third harmonic component of the air gap flux density close to the fundamental harmonic component of the air gap flux density. In such a case, the fundamental harmonic of the back EMF can be lower than the third harmonic of the back EMF. CN113078752A inserts the auxiliary permanent magnets as an independent axial layer between the axial layers of the main magnets. Thus, if we explore the axial cross-section of the rotor, we can see two types of magnetic rings. The first one contains the main rotor magnets which are responsible for the excitation of the fundamental harmonic of back EMF. The second ring contains the auxiliary magnets exciting the third harmonic of back EMF. These two types of rings are alternating in the axial direction along whole the rotor magnetic yoke. Both main magnets and auxiliary magnets are magnetized in the radial direction. The placement and magnetic orientation of the auxiliary magnets reduce flux density in the rotor pole axis and therefore the main objective of auxiliary magnets is to make back EMF waveform flatter. The same effect can be achieved for surface-mounted permanent magnets on the rotor by the modification of their shape. Typically, the thickness of the magnet is changing within the pole pitch [5].

As described above, the back EMF waveform also depends on the configuration of the stator winding. The winding designed to operate with both first and third harmonic components must have non-zero winding factors of both first and third harmonic components. Typically, the winding factor of the first harmonic component is higher than the winding factor of the third harmonic component. The third harmonic component of the back EMF is minor and helps to form the back EMF waveform as described in [5]. There also exist designs, where the third harmonic winding factor is higher than that for the first harmonic and the third harmonic component of the back EMF is more significant, as described in [2], [3], [4]. However, the required stator voltage does not optimally utilize available dc voltage in the VSI dc link in this case.

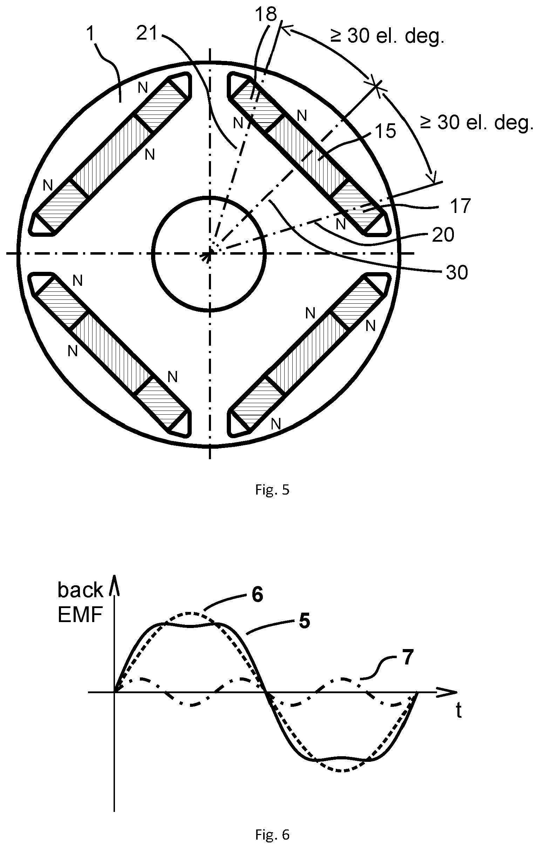

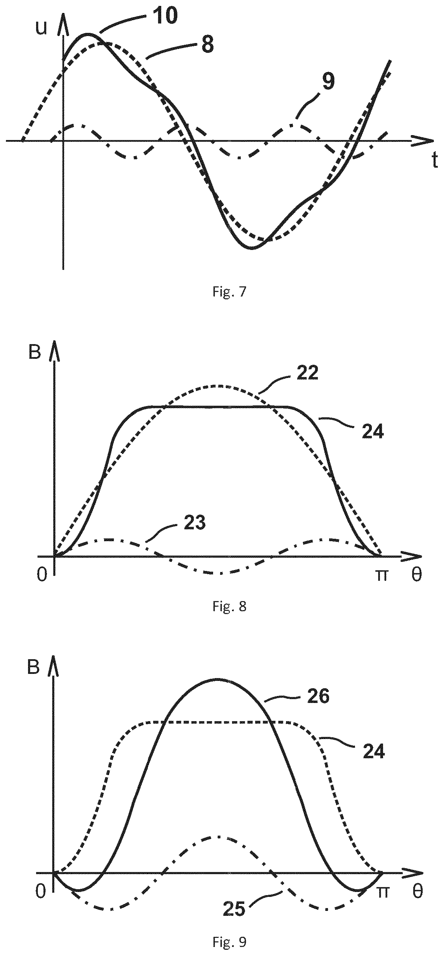

Under the steady state conditions, the stator voltage is given by the back EMF waveform and the voltage drops on the stator inductances (the voltage drops on the stator resistance are neglected). Each harmonic component has different stator inductance and hence also the voltage drop. Conventional solutions make the back EMF waveform flatter, i.e., they reduce the back EMF magnitude. The example of the flattened back EMF with first harmonic component and third harmonic component is shown in Fig. 6. It is beneficial under the lighter loads (lower stator current), where the voltage drops on stator inductances are small and the stator voltage waveform is close to the back EMF. However, under higher load angles, the stator voltage waveform is significantly different from the back EMF due to the voltage drops on the stator inductances. The back EMF designed based on the state-of-the-art knowledge results in non-optimal stator voltage waveform which does not optimally use the dc-link voltage of the VSI (Fig. 7). The problem is the non-optimal superposition of the first and third harmonic of the stator voltage resulting in the stator voltage magnitude higher than the magnitude of the first harmonic of the stator voltage. The conventional back EMF design faces this problem in whole speed range, specifically in the field weakening.

Document US6211593B1 discloses a rotor of a homopolar electrical machine in Figures 25A and 25B. The rotor includes two types of poles configurations: first pole configuration consists of a single magnet only, adjacent pole configuration consists of magnet split into two parts where in between of them, there is a rotor magnetic circuit core. Therefore, in the geometrical center of this adjacent pole, there is no magnet. The rotor includes 6 poles with two different configurations.

Document US5990591A discloses a rotor where each pole has 1 magnet. This main magnet has extended length on the edges (denoted as auxiliary pole portions). The aim of these extensions is to saturate the magnetic bridges located at both sides of the permanent magnet. It helps to increase the total magnetic flux of the permanent magnet. As a result, the magnetic flux linkage generated by the main magnet area coupled with the stator winding is increased. The auxiliary pole portions do not create the air gap flux. Thus, the auxiliary portions do not affect the shape of the magnetic flux density across the main magnet.

Document CN107733112A discloses a rotor where each rotor pole comprises two pairs of main magnets. The main magnets are arranged in pairs along a radial direction of the rotor core and are not placed in the pole axis. Auxiliary magnets are placed in the pole axis between the main magnets.

Document JP2019122232A discloses a rotor of an electric rotating machine with main magnet and auxiliary magnets. The geometrical center of the main magnet is of the same distance from the geometrical center of the rotor body as the geometrical centers of auxiliary magnets.

References:

[1] P. Kalaj et al., "Multi-Pole Winding Behavior in Multiphase Motors under Current Harmonics Operation," in IEEE Transactions on Energy Conversion, 2022, doi: 10.1109/TEC.2022.3183262.

[2] J. Gong, H. Zahr, E. Semail, M. Trabelsi, B. Aslan and F. Scuiller, "Design Considerations of Five-Phase Machine With Double p/3p Polarity," in IEEE Transactions on Energy Conversion, vol. 34, no. 1, pp. 12-24, March 2019, doi: 10.1109/TEC.2018.2851287.

[3] H. Zahr, E. Semail, B. Aslan and F. Scuiller, "Maximum Torque Per Ampere strategy for a biharmonic five-phase synchronous machine," 2016 International Symposium on Power Electronics, Electrical Drives, Automation and Motion (SPEEDAM), 2016, pp. 91-97, doi: 10.1109/SPEEDAM.2016.7525869.

[4] B. Aslan and E. Semail, "New 5-phase concentrated winding machine with bi-harmonic rotor for automotive application," 2014 International Conference on Electrical Machines (ICEM), 2014, pp. 2114-2119, doi: 10.1109/ICELMACH.2014.6960476.

[5] K. Wang, Z. Q. Zhu and G. Ombach, "Torque Improvement of Five-Phase Surface-Mounted Permanent Magnet Machine Using Third-Order Harmonic," in IEEE Transactions on Energy Conversion, vol. 29, no. 3, pp. 735-747, Sept. 2014, doi: 10.1109/TEC.2014.2326521.

Summary of the invention

The invention lies in a rotor with permanent magnets having at least two poles. The rotor is designed for use in at least five-phase alternating current electric machine. The electric machine is typically electric motor or electric generator. The rotor comprises a rotor body and a set of permanent magnets in each pole. The rotor can be either an inner rotor or an outer rotor.

Each pole comprises a main magnet which is placed by its geometrical center in the pole axis. The main magnet is so shaped and oriented that its longest edge in the rotor cross-section is perpendicular to the pole axis. The pole axis is the axis passing the geometrical center of the rotor body and splitting the pole into two parts having the same area in the rotor cross-section. Each pole further comprises a first auxiliary magnet. The first auxiliary magnet is placed so that the line between its geometrical center and the geometrical center of the rotor body is rotated relative to the pole axis by at least 30 electrical degrees clockwise. Each pole further comprises a second auxiliary magnet. The second auxiliary magnet is placed so that the line between its geometrical center and the geometrical center of the rotor body is rotated relative to the pole axis counter-clockwise by the same angle as said line of the first auxiliary magnet. The magnetic orientations of the first auxiliary magnet and the second auxiliary magnet are opposite to the magnetic orientation of the main magnet.

The resulting value of the magnetic flux density in the pole axis measured at the rotor active side outside the rotor in its surrounding having relative permeability equal to 1 is more than twice higher than the resulting value of the magnetic flux density measured at the same distance from the geometrical center of the rotor body in the axis passing the geometrical center of the rotor body and rotated by 60 electrical degrees from the pole axis. The magnetic flux density is normally measured and compared in the air gap, when the rotor is assembled with the stator. The air gap is the rotor surrounding having relative permeability equal to 1 which is located between the rotor active side and the stator surface. The rotor active side is side of the rotor where auxiliary magnets are closer to the rotor body surface.

To define said magnetic flux density value within the pole, several magnets' layouts are possible. First of all, each pole may further comprise a third auxiliary magnet. When used, this third auxiliary magnet is placed by its geometrical center in the pole axis and its magnetic orientation is identical to the magnetic orientation of the main magnet.

Furter, the main magnet may be buried in the rotor body. This means that the main magnet is completely embedded in the rotor body and no part thereof is visible from the outside as it is covered by the rotor body material. Alternatively, the main magnet may be placed on the surface of the rotor body or placed in a slot on the rotor body. When placed in the slot on the rotor body, the main magnet is partly hidden in the rotor body material but it is still visible from the outside as it is not completely covered by the rotor body material. Outermost part of the main magnet may project out of the rotor body, may be on the same level as the rotor body outer surface or may be slightly below the rotor body outer surface.

The auxiliary magnets may also be buried in the rotor body, placed on the surface of the rotor body and/or placed in slots on the rotor body. Their position within the rotor body is defined in similar way as the one above of the main magnet.

Further, the geometrical center of the main magnet may be of the same distance from the geometrical center of the rotor body as the geometrical center of the first or the second auxiliary magnet. This means that geometrical centers of these magnets are arranged along a circle having its center identical to the geometrical center of the rotor body.

Alternatively, the geometrical center of the main magnet may be of a different distance from the geometrical center of the rotor body than the geometrical center of any of auxiliary magnets.

The described invention allows design of the back EMF to achieve the best utilization of the dc-link voltage of the VSI in the selected critical operating points. The invention uses the conventional stator winding design where the first harmonic winding factor is higher than the winding factor of the third harmonic. The back EMF is optimized via original rotor magnetic circuit design determining the shape of the air gap flux. In contrast to the conventional solutions, the described invention increases the flux density in the rotor pole axis. Thus, the optimality criterion of the rotor design is not the flatness of the back EMF waveform but the maximum achievable usage of the VSI dc-link voltage in selected operating points. In comparison to conventional solutions, the described invention allows increase of the electric machine maximum torque while keeping the same VSI dc-link voltage. The increased torque results in increase of the maximum power of the electric machine which is just limited by its thermal design. Alternatively, this invention allows keeping the electric machine torque and power while reducing the electric machine dimensions and weight.

<u>Brief description of drawings</u>

The invention is further explained by means of the drawings. Figures 1-5 describe rotor embodiments with permanent magnets suitable to provide the waveform of the back EMF proposed by the described invention.

Figure 1 is the cross-section of the rotor with four poles, each pole comprising buried main magnet and three auxiliary magnets placed in the slots on the surface of the rotor body.

Figure 2 is the cross-section of the rotor with four poles, each pole comprising buried main magnet and three auxiliary magnets.

Figure 3 is the cross-section of the rotor with four poles, each pole comprising buried main magnet and three auxiliary magnets placed on the surface of the rotor body.

Figure 4 is the cross-section of the rotor with four poles, each pole comprising main magnet and two auxiliary magnets placed on the surface of the rotor body.

Figure 5 is the cross-section of the rotor with four poles, each pole comprising buried main magnet and two auxiliary magnets.

Figure 6 shows the conventional back EMF flattened waveform.

Figure 7 shows an example of a waveform of the stator voltage of the electrical machine under higher load angle.

Figure 8 illustrates a typical magnetic flux density distribution produced by the main magnet with its first and third harmonic components.

Figure 9 describes the magnetic flux density distribution generated by the main and auxiliary magnets as proposed in this invention.

Figure 10 shows the flattened no-load flux linkage waveform produced by the air gap magnetic field according to Fig. 9.

Figure 11 shows the back EMF waveform as a resulting waveform of the flux linkage in Fig. 10.

Figure 12 shows the under-load stator optimized voltage of the chosen operating point.

Figure 13 shows a vector diagram of both first and third harmonic back EMFs where Ui1 and Ui3 are aligned.

Figure 14 shows a vector diagram of the first harmonic component of stator voltage of the loaded machine, when the first harmonic component of stator voltage reaches its positive amplitude.

Figure 15 shows a vector diagram of the third harmonic component of stator voltage of the loaded machine, when the third harmonic component of stator voltage reaches its negative amplitude.

Figure 16 shows a vector diagram of the first harmonic component of stator voltage of the loaded machine, when the first harmonic component of the back EMF reaches its positive amplitude.

Figure 17 shows a vector diagram of the third harmonic components of stator voltage of the loaded machine, when the third harmonic component of the back EMF reaches its positive amplitude.

Description of preferred embodiments

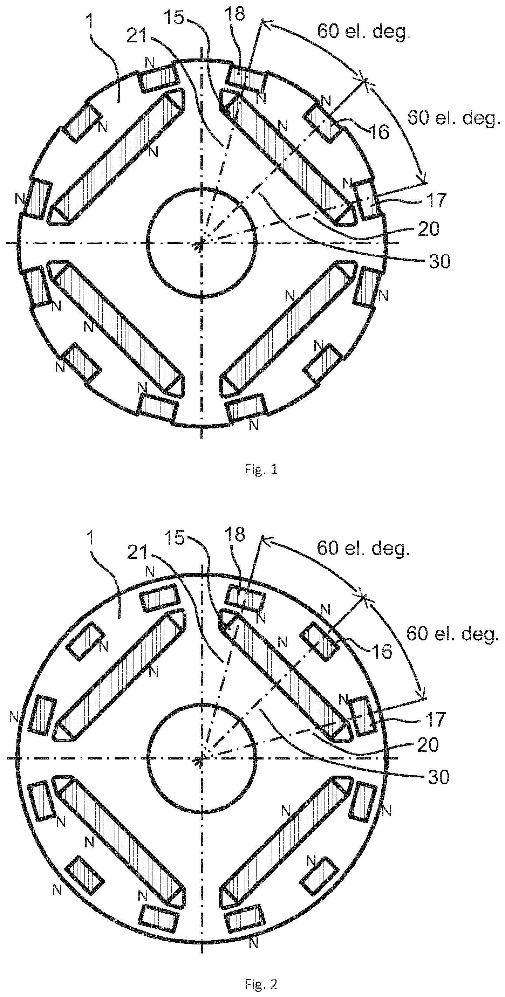

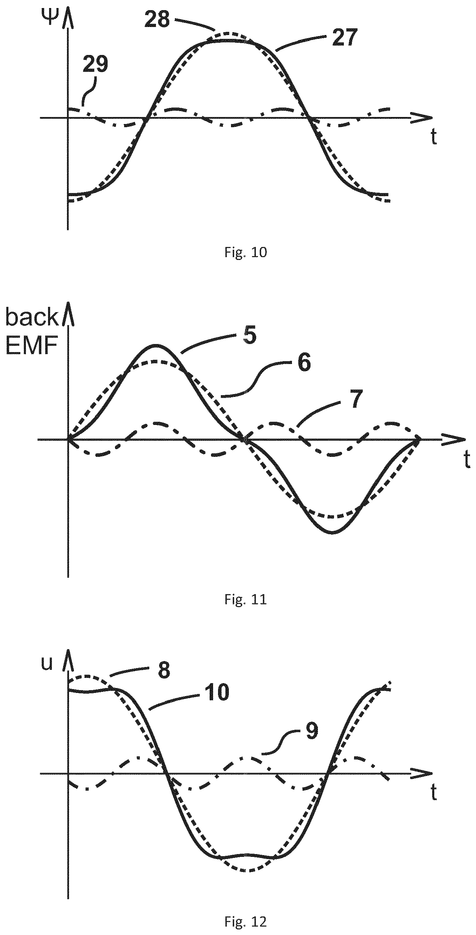

The exemplary rotor arrangement according to the described invention is shown in Fig. 1. The rotor comprises a rotor body 1 with 4 poles. In the rotor cross-section, each pole consists of a buried permanent main magnet 15 placed by its geometrical center in the pole axis 30. The longest edge of the main magnet 15 is perpendicular to the pole axis 30. The main magnet 15 is completed by three auxiliary magnets 16, 17 and 18 placed in slots on the surface of the rotor body 1. Third auxiliary magnet 16 is placed in the pole axis 30 and its magnetic orientation is identical to the magnetic orientation of the main magnet 15. The first auxiliary magnet 17 is placed so that the line 20 between its geometrical center and the geometrical center of the rotor body 1 is rotated relative to the pole axis 30 by 60 electrical degrees clockwise. The magnetic orientation of the first auxiliary magnet 17 is opposite to the magnetic orientation of the main magnet 15. The second auxiliary magnet 18 is placed so that the line 21 between its geometrical center and the geometrical center of the rotor body 1 is rotated relative to the pole axis 30 counter-clockwise by the same angle (60 electrical degrees) as said line 20 of the first auxiliary magnet 17. The magnetic orientation of the second auxiliary magnet 18 is opposite to the magnetic orientation of the main magnet 15. The geometrical center of the main magnet 15 is of a different distance from the geometrical center of the rotor body 1 than the geometrical center of any of auxiliary magnets 16, 17, 18.
The resulting value of the magnetic flux density in the pole axis 30 measured at the rotor active side outside the rotor in its surrounding having relative permeability equal to 1 is more than twice higher than the resulting value of the magnetic flux density measured at the same distance from the geometrical center of the rotor body 1 in the axis passing the geometrical center of the rotor body 1 and rotated by 60 electrical degrees from the pole axis 30. In this embodiment, said line in which the resulting value of the magnetic flux density is measured to be compared with the resulting value of the magnetic flux density in the pole axis 30, is the same as the line 20 between the geometrical center of the first auxiliary magnet 17 and the geometrical center of the rotor body 1 (and the same as the line 21 between the geometrical center of the second auxiliary magnet 18 and the geometrical center of the rotor body 1, respectively).
For simplicity, we suppose that the rotor magnetic circuit operates in the linear part of the magnetic characteristic. Therefore, the total magnetic field can be analyzed by superposition of the magnetic field produced by the main magnet 15 and the auxiliary magnets 16, 17 and 18. In the ideal case, the magnetic field distribution in the air gap (when the rotor is assembled with the stator and the electric machine is in use) generated by the main magnet 15 is sinusoidal. In real arrangement, the main magnet 15 generates not only its first harmonic component 22 but also other harmonics, including the third harmonic component 23 and the air gap magnetic field 24 flattened according to Fig. 8. On the other hand, three auxiliary magnets 16, 17 and 18 generate approximately harmonic distribution of the magnetic field 25 in the air gap (when the rotor is assembled with the stator and the electric machine is in use). The frequency of this harmonic waveform is, however, three times higher compared to the field generated by the main magnet 15 and oriented according to Fig. 9. Superposition of these magnetic fields 24, 25 generated by the main magnet 15 and auxiliary magnets 16, 17, 18 enables shaping of the resulting total magnetic field 26 in Fig. 9. In steady state, the rotor rotates by a constant mechanical angular speed ω/p (p is number of polepairs of the electrical machine) and the resulting rotor total magnetic field 26 interacts with the stator winding and forms the flux linkage waveform Ψ(t) 27 according to Fig. 10. The flux linkage waveform 27 can be decomposed to the first 28 and third 29 harmonic components described by equation:

$$\psi(t) = \psi1(t) + \psi3(t) = -\psi1\mathrm{m} \cdot \cos\omega t + \psi3\mathrm{m} \cdot \cos 3\omega t$$

The back EMF is generated in the stator winding by

$$\mathrm{ui}(t) = \frac{d\psi(t)}{dt} = \omega \cdot \psi1\mathrm{m} \cdot \sin\omega t - 3 \cdot \omega \cdot \psi3\mathrm{m} \cdot \sin 3\omega t$$

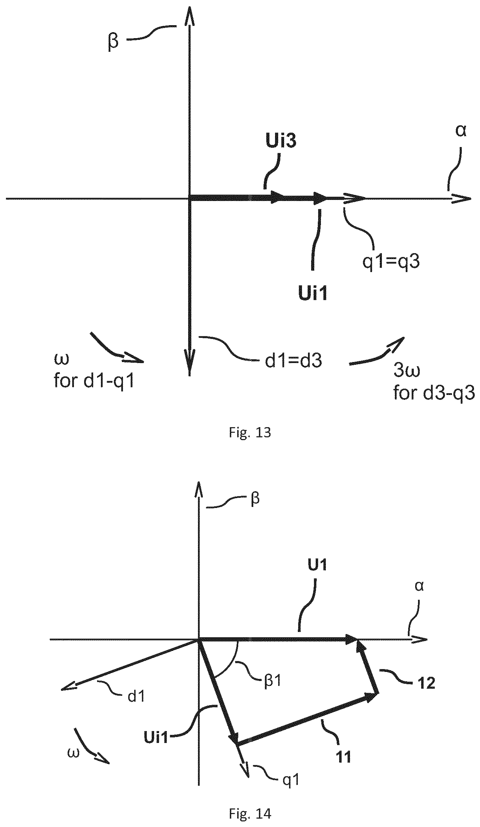

This equation describes the back EMF waveform 5 shown in Fig. 11. It can be seen that the resulting back EMF 5 waveform contains the first 6 and third 7 harmonic components. These waveforms can be transferred to phasors Ui1 and Ui3 (Figures 14-17) with magnitudes ωΨ1m and 3ωΨ3m rotating by angular speeds ω and 3ω, respectively, in the stationary coordinate system α-β where the real axis α is identical to the axis of the phase winding for which the voltage phasors are displayed. The waveform can be reconstructed by projecting each of the phasors to the real axis α. For the phasors Ui1 and Ui3, two coordinate systems d1-q1 and d3-q3 (d-direct and q-quadrature axis, the d-axis leads the q-axis by 90 electrical degrees) rotating by angular speeds ω and 3ω, respectively, are introduced (Figures 14-17). The phasors Ui1 and Ui3 are placed on q1 and q3 axis, respectively. The coordinate systems d1-q1 and d3-q3 overlap exactly at the time point when both back EMF phasors Ui1 and Ui3 are aligned with the real axis α (Fig. 13).

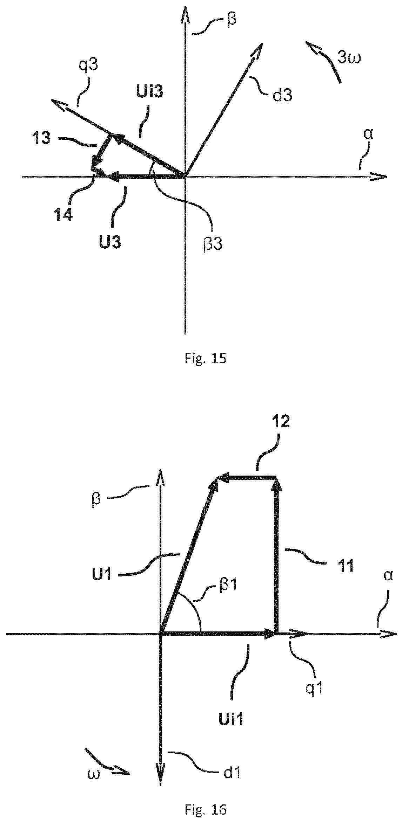

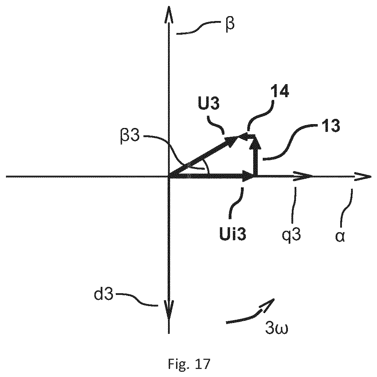

The exemplary rotor arrangement according to the described invention shown in Fig. 1 generates the resulting waveform of the total back EMF 5 shown in Fig. 11. Both, first 6 and third 7 harmonic components reach their positive amplitude at the same time and thus, there is a significant peak on the resulting waveform 5. As discussed above, under no-load conditions, the stator voltage waveform is almost same as the back EMF waveform shown in Fig. 11. However, the main effect of the described invention is under loaded conditions. When the electric machine is loaded, the stator current increases and the resulting stator voltage waveform is modified due to significant voltage drops on stator inductances. Since the phasors Ui1 and Ui3 rotate by different angular speed, the phasor diagrams for both harmonic components are analyzed separately. As illustrated in Fig. 16, the resulting stator voltage U1 consists of the back EMF Ui1, voltage drop 11 excited by the quadrature-axis stator current on the stator reactance ωLq1 (Lq1 is first harmonic stator inductance in q1-axis) and voltage drop 12 excited by the direct-axis stator current on the stator reactance ωLd1 (Ld1 is first harmonic stator inductance in d1-axis). Similarly, the phasor diagram shown in Fig. 17 which is constructed for the same time instant as Fig. 16, illustrates the situation for the third harmonic. The resulting stator voltage U3 consists of the back EMF Ui3, voltage drop 13 excited by the quadrature-axis stator current (third harmonic) on the stator reactance 3ωLq3 (Lq3 is third harmonic stator inductance in q3-axis) and voltage drop 14 excited by the direct-axis stator current (third harmonic) on the stator reactance 3ωLd3 (Ld3 is third harmonic stator inductance in d3-axis).

Figures 14 and 15 illustrate the phasor diagrams for the first and third harmonics shown in Fig. 16 and 17 for different time instant. The effect of the rotor which is based on the described invention is illustrated therein. In this moment, the stator voltage phasor U1 is opposite to the phasor U3 which is very important for the resulting stator voltage waveform, as shown in Fig. 12. Since the third harmonic component 9 of the stator voltage reaches its negative amplitude exactly in the time when the first harmonic 8 reaches its positive amplitude, the amplitudes are subtracted, and the resulting stator voltage waveform 10 has the required optimal flat shape (Fig. 12). Thus, the optimal stator voltage waveform is obtained under required load conditions.

To obtain the first harmonic phasor diagram in Fig. 16, the first harmonic phasor diagram in Fig. 14 must be rotated by the load angle β1. In the same time, the third-harmonic phasor diagram is rotated by angle 3·β1 which must be equal to π + β3 to ensure the optimal position of the stator voltage phasor U3 (opposite to U1) illustrated in Fig. 15. This optimal state is described by equation

$$3 \cdot \beta1 = \pi + \beta3$$

The phasor diagrams are created for the motor operation mode of the electric machine. The size of load angles β1 and β3 in these diagrams cannot reach negative value. Therefore, the optimal stator voltage waveform can be obtained for load angle β1 higher than π/3. This load angle corresponds with the high-load operating point of the electrical machine. If the phasor diagrams are created for the generator operation mode, the diagrams will be symmetrical.

According to the described invention, the same effect of achieving optimal stator voltage waveform under desired load conditions can be obtained besides the exemplary rotor arrangement (Fig. 1) by other rotor arrangements which are illustrated in Figures 2-5.

In Fig. 2, each rotor pole consists of the buried permanent main magnet 15 and three auxiliary magnets 16, 17, 18. The main magnet 15 is placed by its geometrical center in the pole axis 30. The longest edge of the main magnet 15 in the rotor cross-section is perpendicular to the pole axis 30. The auxiliary magnets 16, 17, 18 are buried near to the surface of the rotor body 1 between the main magnet 15 and the outer circumference of the rotor body 1. The third auxiliary magnet 16 is placed in the pole axis 30. Its magnetic orientation is identical to the magnetic orientation of the main magnet 15. The first auxiliary magnet 17 is placed so that the line 20 between its geometrical center and the geometrical center of the rotor body 1 is rotated relative to the pole axis 30 by 60 electrical degrees clockwise. The magnetic orientation of the first auxiliary magnet 17 is opposite to the magnetic orientation of the main magnet 15. The second auxiliary magnet 18 is placed so that the line 21 between its geometrical center and the geometrical center of the rotor body 1 is rotated relative to the pole axis 30 counter-clockwise by the same angle (60 electrical degrees) as said line 20 of the first auxiliary magnet 17. The magnetic orientation of the second auxiliary magnet 18 is opposite to the magnetic orientation of the main magnet 15. The geometrical center of the main magnet 15 is of a different distance from the geometrical center of the rotor body 1 than the geometrical center of any of auxiliary magnets 16, 17, 18.

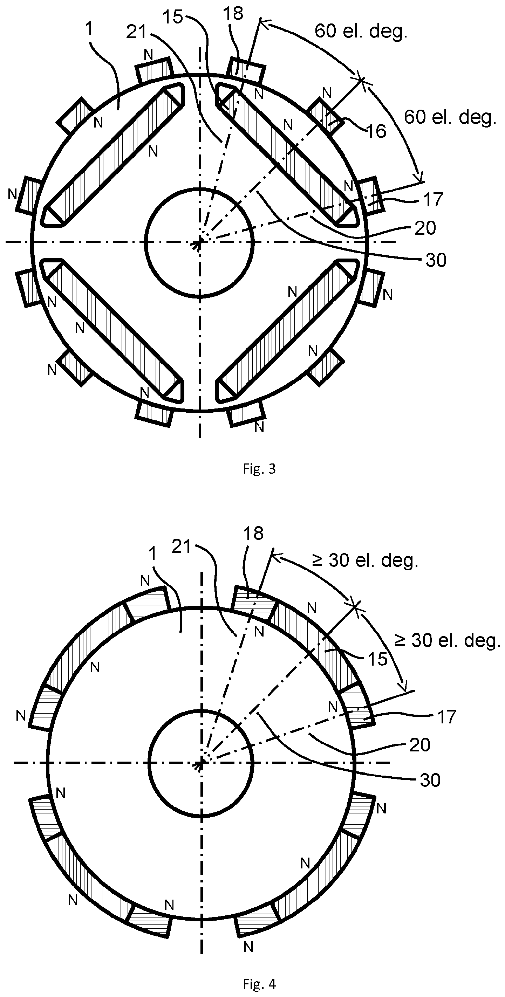

In Fig. 3, each rotor pole consists of the buried permanent main magnet 15 and three auxiliary magnets 16, 17, 18. The main magnet 15 is placed by its geometrical center in the pole axis 30. The longest edge of the main magnet 15 in the rotor cross-section is perpendicular to the pole axis 30. The auxiliary magnets 16, 17, 18 are placed on the surface of the rotor body 1. The third auxiliary magnet 16 is placed in the pole axis 30. Its magnetic orientation is identical to the magnetic orientation of the main magnet 15. The first auxiliary magnet 17 is placed so that the line 20 between its geometrical center and the geometrical center of the rotor body 1 is rotated relative to the pole axis 30 by 60 electrical degrees clockwise. The magnetic orientation of the first auxiliary magnet 17 is opposite to the magnetic orientation of the main magnet 15. The second auxiliary magnet 18 is placed so that the line 21 between its geometrical center and the geometrical center of the rotor body 1 is rotated relative to the pole axis 30 counter-clockwise by the same angle (60 electrical degrees) as said line 20 of the first auxiliary magnet 17. The magnetic orientation of the second auxiliary magnet 18 is opposite to the magnetic orientation of the main magnet 15. The geometrical center of the main magnet 15 is of a different distance from the geometrical center of the rotor body 1 than the geometrical center of any of auxiliary magnets 16, 17, 18.

In Fig. 4, each rotor pole consists of the surface-mounted permanent main magnet 15 and two auxiliary magnets 17 and 18. The magnets 15, 17, 18 form together the rotor pole magnet. The main magnet 15 is placed by its geometrical center in the pole axis 30. The first auxiliary magnet 17 is placed on the surface of the rotor body 1 so that the line 20 between its geometrical center and the geometrical center of the rotor body 1 is rotated relative to the pole axis 30 by 60 electrical degrees clockwise. The magnetic orientation of the first auxiliary magnet 17 is opposite to the magnetic orientation of the main magnet 15. Second auxiliary magnet 18 is placed on the surface of the rotor body 1 so that the line 21 between its geometrical center and the geometrical center of the rotor body 1 is rotated relative to the pole axis 30 counter-clockwise by the same angle (60 electrical degrees) as said line 20 of the first auxiliary magnet 17. The magnetic orientation of the second auxiliary magnet 18 is opposite to the magnetic orientation of the main magnet 15. The geometrical center of the main magnet 15 is of the same distance from the geometrical center of the rotor body 1 as the geometrical center of the two auxiliary magnets 17 and 18.

In Fig. 5, each rotor pole consists of the buried permanent main magnet 15 and two auxiliary magnets 17 and 18. The main magnet 15 is placed by its geometrical center in the pole axis 30. The first auxiliary magnet 17 is placed in the rotor body 1 so that the line 20 between its geometrical center and the geometrical center of the rotor body 1 is rotated relative to the pole axis 30 by 60 electrical degrees clockwise. The magnetic orientation of the first auxiliary magnet 17 is opposite to the magnetic orientation of the main magnet 15. Second auxiliary magnet 18 is placed in the rotor body 1 so that the line 21 between its geometrical center and the geometrical center of the rotor body 1 is rotated relative to the pole axis 30 counter-clockwise by the same angle (60 electrical degrees) as said line 20 of the first auxiliary magnet 17. The magnetic orientation of the second auxiliary magnet 18 is opposite to the magnetic orientation of the main magnet 15. The geometrical center of the main magnet 15 is of a different distance from the geometrical center of the rotor body 1 than the geometrical center of any of auxiliary magnets 17, 18. Magnetomotive force produced by the main magnet 15 is bigger than the magnetomotive force of either auxiliary magnet 17 or 18. Magnetomotive force of the first auxiliary magnet 17 is the same as magnetomotive force of the second auxiliary magnet 18.

List of reference symbols

7

1 - rotor body
5 - back EMF waveform
6 - first harmonic component of the back EMF
7 - third harmonic component of the back EMF
8 - first harmonic component of the stator voltage
9 - third harmonic component of the stator voltage
10 - stator voltage waveform
11 - voltage drop excited by the quadrature-axis stator current on the stator reactance
12 - voltage drop excited by the direct-axis stator current on the stator reactance
13 - voltage drop excited by the quadrature-axis stator current (third harmonic) on the stator reactance
14 - voltage drop excited by the direct-axis stator current (third harmonic) on the stator reactance
15 - main magnet
16 - third auxiliary magnet
17 - first auxiliary magnet
18 - second auxiliary magnet
20 - line between geometrical center of the first auxiliary magnet and the geometrical center of the rotor body
21 - line between geometrical center of the second auxiliary magnet and the geometrical center of the rotor body
22 - first harmonic component of the main magnet
23 - third harmonic component of the main magnet
24 - magnetic field generated by main magnet
25 - magnetic field generated by auxiliary magnets
26 - total magnetic field
27 - flux linkage waveform
28 - first harmonic component of the flux linkage waveform
29 - third harmonic component of the flux linkage waveform
30 - pole axis

## Claims

1. A rotor with permanent magnets with at least two poles for at least five-phase alternating current electric machine, the rotor comprising a rotor body (1) and a set of permanent magnets in each pole wherein, in the rotor cross-section, each pole comprises

   a main magnet (15) placed by its geometrical center in the pole axis (30) with the longest edge of the main magnet (15) in the rotor cross-section being perpendicular to the pole axis (30),
   a first auxiliary magnet (17) placed so that the line (20) between its geometrical center and the geometrical center of the rotor body (1) is rotated relative to the pole axis (30) by at least 30 electrical degrees clockwise,
   a second auxiliary magnet (18) placed so that the line (21) between its geometrical center and the geometrical center of the rotor body (1) is rotated relative to the pole axis (30) counter-clockwise by the same angle as said line (20) of the first auxiliary magnet (17),
   wherein the resulting value of the magnetic flux density in the pole axis (30) measured at the rotor active side outside the rotor in its surrounding having relative permeability equal to 1 is more than twice higher than the resulting value of the magnetic flux density measured at the same distance from the geometrical center of the rotor body (1) in the axis passing the geometrical center of the rotor body (1) and rotated by 60 electrical degrees from the pole axis (30)
   **characterized in that** the magnetic orientations of the first auxiliary magnet (17) and the second auxiliary magnet (18) are opposite to the magnetic orientation of the main magnet (15).

2. The rotor according to claim 1 **characterized in that** each pole further comprises a third auxiliary magnet (16) placed by its geometrical center in the pole axis (30) wherein its magnetic orientation is identical to the magnetic orientation of the main magnet (15).

3. The rotor according to claim 1 or 2 **characterized in that** the main magnet (15) is buried in the rotor body (1) or placed on the surface of the rotor body (1) or placed in slot on the rotor body (1).

4. The rotor according to any of claims 1 to 3 **characterized in that** the auxiliary magnets (16, 17, 18) are buried in the rotor body (1) and/or placed on the surface of the rotor body (1) and/or placed in slots on the rotor body (1).

5. The rotor according to any of preceding claims **characterized in that** the geometrical center of the main magnet (15) is of the same distance from the geometrical center of the rotor body (1) as the geometrical center of the first or the second auxiliary magnet (17, 18).

6. The rotor according to any of claims 1 to 4 **characterized in that** the geometrical center of the main magnet (15) is of a different distance from the geometrical center of the rotor body (1) than the geometrical center of any of auxiliary magnets (16, 17, 18).

**Patentansprüche**

1. Rotor mit Dauermagneten mit mindestens zwei Polen für mindestens Fünf-Phasen-Wechselstrom-Elektromaschine, wobei der Rotor einen Rotorkörper (1) und ein Satz von Dauermagneten in jedem Pol umfasst, wobei in der Rotorquerschnittsansicht jeder Pol umfasst:

    einen Hauptmagneten (15), der mit seinem geometrischen Mittelpunkt auf der Polachse (30) angeordnet ist, wobei die längste Kante des Hauptmagneten (15) im Rotorquerschnitt senkrecht zur Polachse (30) verläuft, einen ersten Hilfsmagneten (17), der so angeordnet ist, dass die Linie (20) zwischen seinem geometrischen Mittelpunkt und dem geometrischen Mittelpunkt des Rotorkörpers (1) relativ zur Polachse (30) im Uhrzeigersinn um mindestens 30 elektrische Grad gedreht ist, einen zweiten Hilfsmagneten (18), der so angeordnet ist, dass die Linie (21) zwischen seinem geometrischen Mittelpunkt und dem geometrischen Mittelpunkt des Rotorkörpers (1) relativ zur Polachse (30) gegen den Uhrzeigersinn um denselben Winkel gedreht ist wie die Linie (20) des ersten Hilfsmagneten (17),
    wobei der resultierende Wert der magnetischen Flussdichte auf der Polachse (30), gemessen an der aktiven Rotorseite außerhalb des Rotors in einer Umgebung mit relativer Permeabilität gleich 1, mehr als doppelt so hoch ist wie der resultierende Wert der magnetischen Flussdichte, gemessen im gleichen Abstand vom geometrischen Mittelpunkt des Rotorkörpers (1) auf der Achse, die durch den geometrischen Mittelpunkt des Rotorkörpers (1) verläuft und um 60 elektrische Grad von der Polachse (30) gedreht ist,
    **dadurch gekennzeichnet, dass** die magnetischen Orientierungen des ersten Hilfsmagneten (17) und des zweiten Hilfsmagneten (18) entgegengesetzt zur magnetischen Orientierung des Hauptmagneten (15) sind.

2. Rotor nach Anspruch 1, **dadurch gekennzeichnet, dass** jeder Pol ferner einen dritten Hilfsmagneten (16) umfasst, der mit seinem geometrischen Mittelpunkt auf der Polachse (30) angeordnet ist, wobei seine magnetische Orientierung mit der magnetischen Orientierung des Hauptmagneten (15) übereinstimmt.

3. Rotor nach Anspruch 1 oder 2, **dadurch gekennzeichnet, dass** der Hauptmagnet (15) im Rotorkörper (1) eingebettet ist oder auf der Oberfläche des Rotorkörpers (1) angeordnet ist oder in einem Schlitz am Rotorkörper (1) platziert ist.

4. Rotor nach einem der Ansprüche 1 bis 3, **dadurch gekennzeichnet, dass** die Hilfsmagnete (16, 17, 18) im Rotorkörper (1) eingebettet und/oder auf der Oberfläche des Rotorkörpers (1) angeordnet und/oder in Schlitzen am Rotorkörper (1) platziert sind.

5. Rotor nach einem der vorhergehenden Ansprüche, **dadurch gekennzeichnet, dass** der geometrische Mittelpunkt des Hauptmagneten (15) denselben Abstand vom geometrischen Mittelpunkt des Rotorkörpers (1) hat wie der geometrische Mittelpunkt des ersten oder zweiten Hilfsmagneten (17, 18).

6. Rotor nach einem der Ansprüche 1 bis 4, **dadurch gekennzeichnet, dass** der geometrische Mittelpunkt des Hauptmagneten (15) einen anderen Abstand vom geometrischen Mittelpunkt des Rotorkörpers (1) hat als der geometrische Mittelpunkt eines beliebigen Hilfsmagneten (16, 17, 18).

**Revendications**

1. Rotor à aimants permanents présentant au moins deux pôles pour au moins une machine électrique à courant alternatif à cinq phases, le rotor comprenant un corps de rotor (1) et un ensemble d'aimants permanents dans chaque pôle, chaque pôle comprenant, en coupe transversale du rotor

    un aimant principal (15) placé avec son centre géométrique sur l'axe de pôle (30), le bord le plus long de l'aimant principal (15) en coupe transversale du rotor étant perpendiculaire à l'axe de pôle (30), un premier aimant auxiliaire (17) placé de sorte que la ligne (20) entre son centre géométrique et le centre géométrique du corps du rotor (1) soit tournée par rapport à l'axe de pôle (30) d'au moins 30 degrés électriques dans le sens horaire, un deuxième aimant auxiliaire (18) placé de sorte que la ligne (21) entre son centre géométrique et le centre géométrique du corps du rotor (1) soit tournée par rapport à l'axe de pôle (30) dans le sens antihoraire du même angle que ladite ligne (20) du premier aimant auxiliaire (17),

le tout de manière que la valeur résultante de la densité de flux magnétique dans l'axe de pôle (30), mesurée sur le côté actif du rotor à l'extérieur de celui-ci dans un environnement ayant une perméabilité relative égale à 1, soit plus de deux fois supérieure à la valeur résultante de la densité de flux magnétique mesurée à la même distance du centre géométrique du corps du rotor (1) sur un axe passant par le centre géométrique du corps du rotor (1) et tourné de 60 degrés électriques par rapport à l'axe de pôle (30),

**caractérisé en ce que** les orientations magnétiques du premier aimant auxiliaire (17) et du deuxième aimant auxiliaire (18) sont opposées à l'orientation magnétique de l'aimant principal (15).

2. Rotor selon la revendication 1, **caractérisé en ce que** chaque pôle comprend en outre un troisième aimant auxiliaire (16) placé avec son centre géométrique sur l'axe de pôle (30), et dont l'orientation magnétique est identique à celle de l'aimant principal (15).

3. Rotor selon la revendication 1 ou 2, **caractérisé en ce que** l'aimant principal (15) est noyé dans le corps du rotor (1), ou placé sur la surface du corps du rotor (1), ou encore logé dans une fente sur le corps du rotor (1).

4. Rotor selon l'une des revendications 1 à 3, **caractérisé en ce que** les aimants auxiliaires (16, 17, 18) sont noyés dans le corps du rotor (1) et/ou placés sur la surface du corps du rotor (1) et/ou logés dans des fentes sur le corps du rotor (1).

5. Rotor selon l'une quelconque des revendications précédentes, **caractérisé en ce que** le centre géométrique de l'aimant principal (15) est à la même distance du centre géométrique du corps du rotor (1) que le centre géométrique du premier ou du deuxième aimant auxiliaire (17, 18).

6. Rotor selon l'une des revendications 1 à 4, **caractérisé en ce que** le centre géométrique de l'aimant principal (15) est à une distance différente du centre géométrique du corps du rotor (1) par rapport à celle du centre géométrique de l'un quelconque des aimants auxiliaires (16, 17, 18).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

**EP 4 420 219 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015049467 A2
- CN 104883017 A
- CN 113078752 A
- US 6211593 B1
- US 5990591 A
- CN 107733112 A
- JP 2019122232 A

### Non-patent literature cited in the description

- **P. KALAJ et al.** Multi-Pole Winding Behavior in Multiphase Motors under Current Harmonics Operation. *IEEE Transactions on Energy Conversion*, 2022
- **J. GONG** ; **H. ZAHR** ; **E. SEMAIL** ; **M. TRABELSI** ; **B. ASLAN** ; **F. SCUILLER**. Design Considerations of Five-Phase Machine With Double p/3p Polarity. *IEEE Transactions on Energy Conversion*, March 2019, vol. 34 (1), 12-24
- **H. ZAHR** ; **E. SEMAIL** ; **B. ASLAN** ; **F. SCUILLER**. Maximum Torque Per Ampere strategy for a biharmonic five-phase synchronous machine. *2016 International Symposium on Power Electronics, Electrical Drives, Automation and Motion (SPEEDAM)*, 2016, 91-97
- **B. ASLAN** ; **E. SEMAIL**. New 5-phase concentrated winding machine with bi-harmonic rotor for automotive application. *International Conference on Electrical Machines (ICEM)*, 2014, 2114-2119
- **K. WANG** ; **Z. Q. ZHU** ; **G. OMBACH**. Torque Improvement of Five-Phase Surface-Mounted Permanent Magnet Machine Using Third-Order Harmonic. *IEEE Transactions on Energy Conversion*, September 2014, vol. 29 (3), 735-747